# EUROPEAN PATENT APPLICATION

(11) **EP 4 398 118 A1**
(43) Date of publication of application: **10.07.2024**
(21) Application number: 22885301.6
(22) Date of filing: 11.08.2022
(51) Int. Cl.: G06F 13/42

(54) **SIGNAL TRANSMISSION APPARATUS AND METHOD, AND ELECTRONIC DEVICE**

(30) Priority: 29.10.2021 CN 202111274516
(71) Applicant: Huawei Technologies Co., Ltd., Shenzhen, Guangdong 518129 (CN)
(72) Inventor: HU, Kai, Shenzhen, Guangdong 518129 (CN); CHEN, Puwang, Shenzhen, Guangdong 518129 (CN)
(74) Representative: MERH-IP Matias Erny Reichl Hoffmann Patentanwälte PartG mbB
(86) International application number: PCT/CN2022/111901
(87) International publication number: WO 2023/071401

(57) **Abstract**

This application provides a signal transmission apparatus and method, and an electronic device. The signal transmission apparatus includes a first control board, a second control board, a first FPGA apparatus disposed on a side of the first control board, and a second FPGA apparatus disposed on a side of the second control board. The first control board is connected to the first FPGA apparatus by using a first signal line group, and the first signal line group includes at least one signal line. The second control board is connected to the second FPGA apparatus by using a second signal line group, and the second signal line group includes at least one signal line. The first FPGA apparatus establishes a communication connection with the second FPGA apparatus by using a first bus. A quantity of signal lines of the first bus is less than a quantity of signal lines of the first signal line group or a quantity of signal lines of the second signal line group. According to embodiments of this application, a quantity of signal lines between the first control board and the second control board is reduced. This can reduce signal interference, improve signal transmission quality, and reduce costs.

## Description

### CROSS-REFERENCE TO RELATED APPLICATIONS

This application claims priority to Chinese Patent Application No. 202111274516.1, filed with the China National Intellectual Property Administration on October 29, 2021 and entitled "SIGNAL TRANSMISSION APPARATUS AND METHOD, AND ELECTRONIC DEVICE", which is incorporated herein by reference in its entirety.

### TECHNICAL FIELD

This application relates to the field of signal transmission technologies, and in particular, to a signal transmission apparatus and method, and an electronic device.

### BACKGROUND

In multi-screen application scenarios of an electronic device, a hardware arrangement and a cabling layout of the electronic device are greatly affected. For example, cabling between boards of an existing first control board and second control board is laid out by using a single module, and cabling on the board is laid out based on a module. This layout manner affects a cabling layout between boards of the first control board, and interference occurs between cables. This reduces signal transmission quality of the electronic device.

### SUMMARY

Embodiments of this application provide a signal transmission apparatus and method, and an electronic device. Embodiments of this application can reduce a quantity of signal lines between a first control board and a second control board. This can reduce signal interference, improve signal transmission quality, and reduce costs.

According to a first aspect, an embodiment of this application provides a signal transmission apparatus. The signal transmission apparatus includes a first control board, a second control board, a first FPGA apparatus disposed on a side of the first control board, and a second FPGA apparatus disposed on a side of the second control board. The first control board is connected to the first FPGA apparatus by using a first signal line group, to establish a communication connection with the first FPGA apparatus. The first signal line group includes at least one signal line. The second control board is connected to the second FPGA apparatus by using a second signal line group, to establish a communication connection with the second FPGA apparatus. The second signal line group includes at least one signal line. The first FPGA apparatus establishes a communication connection with the second FPGA apparatus by using a first bus. A quantity of signal lines of the first bus is less than a quantity of signal lines of the first signal line group or a quantity of signal lines of the second signal line group. The first signal line group may include a serial clock line SCK1, a master output/slave input signal line MOSI1, a master input/slave output signal line MISO 1, a chip select signal line CS 1, a serial data line SDA1, a serial clock line SCL1, a serial clock line SCLK1, a left-right clock line LRCK1, a serial data line SDATA1, and the like. The second signal line group may include a plurality of signal lines, such as a serial clock line SCK2, a master output/slave input signal line MOSI2, a master input/slave output signal line MIS02, a chip select signal line CS2, a serial data line SDA2, a serial clock line SCL2, a serial clock line SCLK2, a left-right clock line LRCK2, and a serial data line SDATA2.

According to the signal transmission apparatus of this embodiment of this application, the first FPGA apparatus and the second FPGA apparatus are respectively added to the first control board and the second control board, the first FPGA apparatus implements a communication connection with the second FPGA apparatus by using the first bus, and the quantity of signal lines of the first bus is less than the quantity of signal lines of the first signal line group or the quantity of signal lines of the second signal line group. This design can effectively reduce a quantity of signal lines between the first control board and the second control board, reduce signal interference, improve signal transmission quality of an electronic device and reduce costs.

In a possible design, the first control board includes a processing apparatus, and the first FPGA apparatus is configured to sample a plurality of signals that are output by the processing apparatus. Based on this design, the first FPGA apparatus may collect, by using the first signal line group, the plurality of signals that are output by the first control board.

In a possible design, the first FPGA apparatus is further configured to: convert the plurality of signals of the first control board, and compress converted signals to generate a data packet. Based on this design, the first FPGA apparatus may process a plurality of signals that are collected, and then generate one data packet.

In a possible design, the first FPGA apparatus is further configured to transmit the data packet to the second FPGA apparatus by using the first bus. The second FPGA apparatus is configured to: receive the data packet and decompress the data packet. Based on this design, the first FPGA apparatus and the second FPGA apparatus can implement effect of aggregating and distributing the signals between the first control board and the second control board.

In a possible design, the second FPGA apparatus is further configured to convert decompressed signals, to transmit converted signals to the second control board. Based on this design, the signal transmission apparatus may implement signal transmission through compression and decompression of the FPGA apparatuses, reducing the quantity of signal lines between the first control board and the second control board.

In a possible design, the first bus is a low-voltage differential signaling bus. Optionally, the first FPGA apparatus may be connected to the second FPGA apparatus by using a bus of another type. The bus of another type may include two signal lines, three signal lines, or fewer than six signal lines.

In a possible design, the first signal line group includes an SPI signal line, an I2C signal line, an I2S signal line, and a GPIO signal line. The second signal line group includes an SPI signal line, an I2C signal line, an I2S signal line, and a GPIO signal line.

According to a second aspect, an embodiment of this application further provides a signal transmission method that is applied to a signal transmission apparatus. The signal transmission apparatus includes a first control board, a second control board, a first FPGA apparatus, and a second FPGA apparatus. The method includes: The first FPGA apparatus receives a plurality of signals that are sent by the first control board, and compresses the plurality of signals to generate a data packet. The first control board is connected to the first FPGA apparatus by using a first signal line group, and the first signal line group includes a plurality of signal lines. The second FPGA apparatus receives the data packet of the first FPGA apparatus, where the first FPGA apparatus establishes a communication connection with the second FPGA apparatus by using a first bus. The second FPGA apparatus decompresses the data packet, and transmits decompressed data to the second control board. The second control board is connected to the second FPGA apparatus by using a second signal line group, and the second signal line group includes a plurality of signal lines.

The signal transmission method of this embodiment of this application is applied, so that the first FPGA apparatus collects the plurality of signals of the first control board, and converts and compresses the plurality of signals, to generate the data packet. In the signal transmission method, the second FPGA apparatus may further decompress and convert the data packet, to transmit the decompressed signals to the second control board. Based on this design, effect of aggregating and distributing the signals between the first control board and the second control board can be implemented. The signal transmission method may further reduce a quantity of signal lines between the first control board and the second control board. This can reduce signal interference, improve signal transmission quality of an electronic device, and reduce costs.

In a possible design, a quantity of signal lines of the first bus is less than a quantity of signal lines of the first signal line group or a quantity of signal lines of the second signal line group. Based on this design, the quantity of signal lines between the first control board and the second control board can be reduced. This can reduce signal interference, improve signal transmission quality of the electronic device, and reduce costs.

In a possible design, the method further includes: The first FPGA apparatus transmits the data packet to the second FPGA apparatus by using the first bus. The second FPGA apparatus converts the signals that are obtained by decompressing the data packet, and transmits converted signals to the second control board.

In a possible design, the first bus is a low-voltage differential signaling bus. Optionally, the first FPGA apparatus may be connected to the second FPGA apparatus by using a bus of another type. The bus of another type may include two signal lines, three signal lines, or fewer than six signal lines.

In a possible design, the first signal line group includes an SPI signal line, an I2C signal line, an I2S signal line, and a GPIO signal line. The second signal line group includes an SPI signal line, an I2C signal line, an I2S signal line, and a GPIO signal line.

According to a third aspect, an embodiment of this application further provides an electronic device. The electronic device includes the foregoing signal transmission apparatus.

In a possible design, the electronic device is a foldable electronic device.

According to the signal transmission apparatus and method, and electronic device in embodiments of this application, signal transmission between the first control board and the second control board can be implemented through signal processing of the first FPGA apparatus and the second FPGA apparatus. The quantity of signal lines between the first control board and the second control board can be reduced. This can reduce signal interference, improve signal transmission quality, and reduce costs.

### BRIEF DESCRIPTION OF DRAWINGS

FIG. 1 is a schematic diagram of a structure of a signal transmission apparatus according to an embodiment of this application;
FIG. 2 is another schematic diagram of a structure of a signal transmission apparatus according to an embodiment of this application;
FIG. 3 is another schematic diagram of a structure of a signal transmission apparatus according to an embodiment of this application;
FIG. 4 is a schematic flowchart of a signal transmission method according to an embodiment of this application;
FIG. 5 is another schematic flowchart of a signal transmission method according to an embodiment of this application;
FIG. 6 is a schematic diagram of a structure of a first control board and a first FPGA apparatus according to an embodiment of this application;
FIG. 7 is a schematic diagram of a structure of a second FPGA apparatus according to an embodiment of this application;
FIG. 8 is a schematic diagram of a structure of an electronic device according to an embodiment of this application; and
FIG. 9 is another schematic diagram of a structure of an electronic device according to an embodiment of this application.

### Reference numerals of main components:

| | |
|---|---|
| Signal transmission apparatus | 100 |
| Electronic device | 200 |
| First control board | 10 |
| Processing apparatus | 11 |
| Firmware upgrade module | 16 |
| Detection module | 17 |
| First bus adaptation module | 18 |
| Second bus adaptation module | 19 |
| Second control board | 20 |
| First element | 21 |
| Second element | 22 |
| Third element | 23 |
| Fourth element | 24 |
| Fifth element | 25 |
| First FPGA apparatus | 30 |
| Data sampling module | 31, 41 |
| Signal reconstruction module | 32, 42 |
| Data communication module | 33, 43 |
| Data processing module | 34, 44 |
| Second FPGA apparatus | 40 |
| LVDS bus | 50 |
| First housing | 60 |

| | |
|---|---|
| Second housing | 70 |
| Flexible display | 80 |

In the following specific implementations, this application is further described with reference to the accompanying drawings.

### DESCRIPTION OF EMBODIMENTS

It should be noted that when one element is considered to be "connected" to another element, the element may be directly connected to the another element or an element may be further disposed between them. When one element is considered to be "disposed" on another element, the element may be disposed directly on the another element or an element may be disposed between them.

Unless otherwise defined, all technical and scientific terms used in this specification have same meanings as those usually understood by a person skilled in the art of this application. The terms used in this specification of this application are only for the purpose of describing specific embodiments, and are not intended to limit this application. The term "and/or" used in this specification includes any and all combinations of one or more related enumerated items.

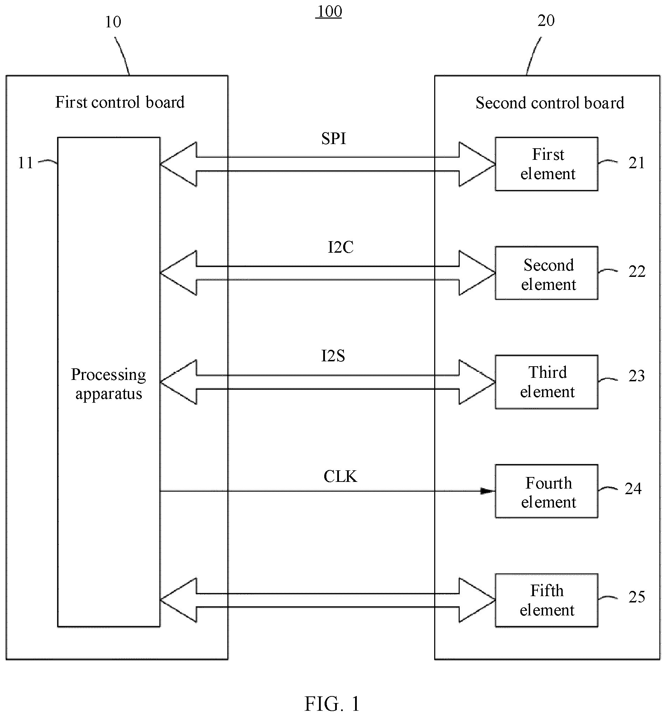

In a scenario, as shown in FIG. 1, a signal transmission apparatus 100 may include a first control board 10, and a second control board 20 that is electrically connected to the first control board 10. The first control board 10 may be electrically connected to the second control board 20 by using a plurality of signal lines, to establish a communication connection between the first control board 10 and the second control board 20. It may be understood that, in some possible implementations, the first control board 10 may be a primary board, and the second control board 20 may be a secondary board.

The first control board 10 may include a processing apparatus 11. In some possible implementations, the processing apparatus 11 may include a central processing unit (central processing unit, CPU). The second control board 20 may include a first element 21, a second element 22, a third element 23, a fourth element 24, and a fifth element 25. It may be understood that the foregoing elements in the second control board 20 are only examples for description. In another possible implementation, the second control board 20 may further include another functional element, to implement more functions of the second control board 20. This is not limited in this application.

For example, as shown in FIG. 1, the first element 21 may be connected to the processing apparatus 11 by using a serial peripheral element (Serial Peripheral Interface, SPI) bus. An SPI signal may be transmitted between the processing apparatus 11 and the first element 21. The second element 22 may be connected to the processing apparatus 11 by using an inter-integrated circuit (Inter-Integrated Circuit, I2C) bus. An I2C signal may be transmitted between the processing apparatus 11 and the second element 22. The third element 23 may be connected to the processing apparatus 11 by using an inter-integrated circuit sound (Inter-IC Sound, I2S) bus. An I2S signal may be transmitted between the processing apparatus 11 and the third element 23. The fourth element 24 may be connected to the processing apparatus 11 by using a clock signal line CLK. A clock signal may be transmitted between the processing apparatus 11 and the fourth element 24. The fifth element 25 may be connected to the processing apparatus 11 by using a GPIO signal line. A GPIO signal may be transmitted between the processing apparatus 11 and the fifth element 25.

Optionally, the first element 21 may be a touchscreen element, the second element 22 may be a sensor element, the third element 23 may be an amplifier element, the fourth element 24 may be a subscriber identification module (Subscriber Identification Module, SIM) element, and the fifth element 25 may be a general purpose input/output (General Purpose Input/Output, GPIO) element. It may be understood that, in some embodiments, the touchscreen element may establish a communication connection with the central processing unit of the processing apparatus 11 by using the SPI bus. The sensor element may establish a communication connection with the central processing unit by using the I2C bus. The amplifier element may communicate with the central processing unit by using the I2S bus. The SIM element may communicate with the central processing unit by using the clock signal line. The general purpose input/output element may establish a communication connection with the central processing unit by using the GPIO signal line.

In the scenario shown in FIG. 1, the SPI bus, the I2C bus, the I2S bus, and the clock signal line may include a plurality of signal lines. For example, the SPI bus may include four signal lines. The four signal lines include a serial clock line SCK, a master output/slave input signal line MOSI, a master input/slave output signal line MISO, and a chip select signal line CS. The I2C bus may include a serial data line SDA and a serial clock line SCL. The I2S bus may include a serial clock line SCLK, a left-right clock line LRCK, and a serial data line SDATA.

It may be understood that, in the application scenario shown in FIG. 1, the elements in the second control board 20 are connected to the first control board 10 by using the signal lines. However, there are a large quantity of signal lines connected between the first control board 10 and the second control board 20. For example, in the scenario shown in FIG. 1, more than 90 signal lines are disposed between the first control board 10 and the second control board 20. This affects a cabling layout of an entire electronic device and reduces signal transmission quality of the electronic device. In addition, manufacturing difficulty of the electronic device is increased, and reliability and a waterproof capability of the electronic device are reduced.

For the problem in the foregoing scenario, embodiments of this application provide a signal transmission apparatus and an electronic device. The signal transmission apparatus in an embodiment may implement signal and data transmission, and signal sampling and reconstruction between a first control board 10 and a second control board 20 through a field programmable gate array (Field Programmable Gate Array, FPGA) aggregation. In this way, a quantity of signal lines between the first control board 10 and the second control board 20 is reduced. This can reduce signal interference, improve signal transmission quality, and reduce costs.

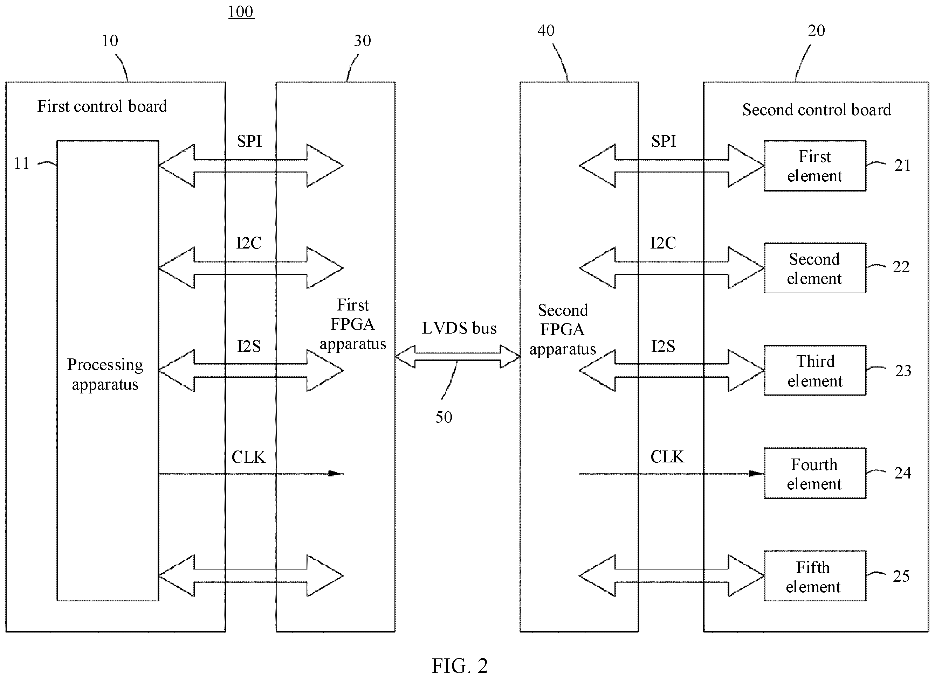

FIG. 2 is a schematic diagram of a signal transmission apparatus 100 according to an embodiment of this application.

A difference from the embodiment of the signal transmission apparatus 100 shown in FIG. 1 lies in that, as shown in FIG. 2, the signal transmission apparatus 100 in this embodiment may further include a first FPGA apparatus 30 and a second FPGA apparatus 40. In this embodiment, the first FPGA apparatus 30 may be connected to a first control board 10 by using a first signal line group, and the second FPGA apparatus 40 may be connected to a second control board 20 by using a second signal line group. The first FPGA apparatus 30 may be connected to the second FPGA apparatus 40, and the first FPGA apparatus 30 may perform data communication with the second FPGA apparatus 40. It may be understood that the first signal line group may include a plurality of signal lines, such as a serial clock line SCK1, a master output/slave input signal line MOSI1, a master input/slave output signal line MISO1, a chip select signal line CS1, a serial data line SDA1, a serial clock line SCL1, a serial clock line SCLK1, a left-right clock line LRCK1, and a serial data line SDATA1. The second signal line group may include a plurality of signal lines, such as a serial clock line SCK2, a master output/slave input signal line MOSI2, a master input/slave output signal line MIS02, a chip select signal line CS2, a serial data line SDA2, a serial clock line SCL2, a serial clock line SCLK2, a left-right clock line LRCK2, and a serial data line SDATA2.

Specifically, the first control board 10 may include a processing apparatus 11, the processing apparatus 11 may include a central processing unit, and the central processing unit may be connected to the first FPGA apparatus 30 by using an SPI bus. Therefore, an SPI signal may be transmitted between the processing apparatus 11 and the first FPGA apparatus 30. In this embodiment, the central processing unit may be further connected to the first FPGA apparatus 30 by using an I2C bus. Therefore, an I2C signal may be transmitted between the processing apparatus 11 and the first FPGA apparatus 30. The central processing unit may be connected to the first FPGA apparatus 30 by using an I2S bus. Therefore, an I2S signal may be transmitted between the processing apparatus 11 and the first FPGA apparatus 30. Further, the central processing unit in this embodiment may be further connected to the first FPGA apparatus 30 by using a clock signal line CLK. Therefore, a clock signal may be transmitted between the processing apparatus 11 and the first FPGA apparatus 30. The central processing unit may be further connected to the first FPGA apparatus 30 by using a GPIO signal line. Therefore, a GPIO signal may be transmitted between the processing apparatus 11 and the first FPGA apparatus 30.

The first element 21 may be connected to the second FPGA apparatus 40 by using an SPI bus. An SPI signal may be transmitted between the first element 21 and the second FPGA apparatus 40. The second element 22 may be connected to the second FPGA apparatus 40 by using an I2C bus. An I2C signal may be transmitted between the second element 22 and the second FPGA apparatus 40. The third element 23 may be connected to the second FPGA apparatus 40 by using an I2S bus. An I2S signal may be transmitted between the third element 23 and the second FPGA apparatus 40. The fourth element 24 may be connected to the second FPGA apparatus 40 by using a clock signal line CLK. A clock signal may be transmitted between the fourth element 24 and the second FPGA apparatus 40. The fifth element 25 may be connected to the second FPGA apparatus 40 by using a GPIO signal line. A GPIO signal may be transmitted between the fifth element 25 and the second FPGA apparatus 40.

It may be understood that, in a possible implementation, the processing apparatus 11 may further include a plurality of elements (not shown in the figure). For example, the plurality of elements may include a sixth element, a seventh element, an eighth element, a ninth element, or a tenth element. Each of the sixth element to the tenth element may be connected to the first FPGA apparatus 30. For example, the sixth element may be connected to the first FPGA apparatus 30 by using the SPI bus, the seventh element may be connected to the first FPGA apparatus 30 by using the I2C bus, the eighth element may be connected to the first FPGA apparatus 30 by using the I2S bus, the ninth element may be connected to the first FPGA apparatus 30 by using the clock signal line, and the tenth element may be connected to the first FPGA apparatus 30 by using the GPIO signal line.

Further, in this embodiment, the first FPGA apparatus 30 may be connected to the second FPGA apparatus 40 by using a low-voltage differential signaling (Low-Voltage Differential Signaling, LVDS) bus 50. It may be understood that, in another embodiment, the first FPGA apparatus 30 may alternatively establish a communication connection with the second FPGA apparatus 40 by using another bus. This is not limited in this embodiment of this application. Optionally, the LVDS bus may include six signal lines. It may be understood that, in this embodiment of this application, the LVDS bus may be used to implement data transmission between the first FPGA apparatus 30 and the second FPGA apparatus 40. The LVDS bus has an advantage of differential transmission, and can further transmit high-speed data over a long distance. It may be understood that the first FPGA apparatus 30 may be connected to the second FPGA apparatus 40 by using a bus of another type. The bus of another type may include two signal lines, three signal lines, or fewer than six signal lines.

In a specific implementation process, the first FPGA apparatus 30 may collect analog signals such as the SPI signal, the I2C signal, and the general purpose GPIO signal of the first control board 10. Therefore, the first FPGA apparatus 30 may generate corresponding digital signals based on a collected SPI signal, I2C signal, and general purpose GPIO signal. The first FPGA apparatus 30 may be further configured to: compress the digital signals, and transmit the compressed digital signals to the second FPGA apparatus 40 by using the LVDS bus 50. The second FPGA apparatus 40 is configured to: receive the compressed digital signals of the first FPGA apparatus 30, and decompress the compressed digital signals. Therefore, the second FPGA apparatus 40 may convert the decompressed digital signals into analog signals. Further, the second FPGA apparatus 40 may output the converted analog signals to corresponding signal pins of the second control board 20. It can be learned from the foregoing that a quantity of signal lines of each of the first signal line group and the second signal line group is greater than a quantity of signal lines of the LVDS bus 50. Based on this design, this embodiment of this application can effectively reduce a quantity of signal lines between the first control board 10 and the second control board 20.

It may be understood that, according to the signal transmission apparatus 100 in the embodiment shown in FIG. 1, more than 90 signal lines are disposed between the first control board 10 and the second control board 20, to complete a communication connection between the first control board 10 and the second control board 20. This affects a cabling layout of an entire electronic device and also reduces signal transmission quality of the electronic device. According to the signal transmission apparatus 100 in the embodiment shown in FIG. 2, the LVDS bus 50 between the first FPGA apparatus 30 and the second FPGA apparatus 40 may include the six signal lines. Compared with the signal transmission apparatus 100 in FIG. 1, the signal transmission apparatus 100 shown in FIG. 2 may definitely reduce the quantity of signal lines between the first control board 10 and the second control board 20. This can reduce an interference problem in a signal transmission process, improve signal transmission quality, and further reduce costs.

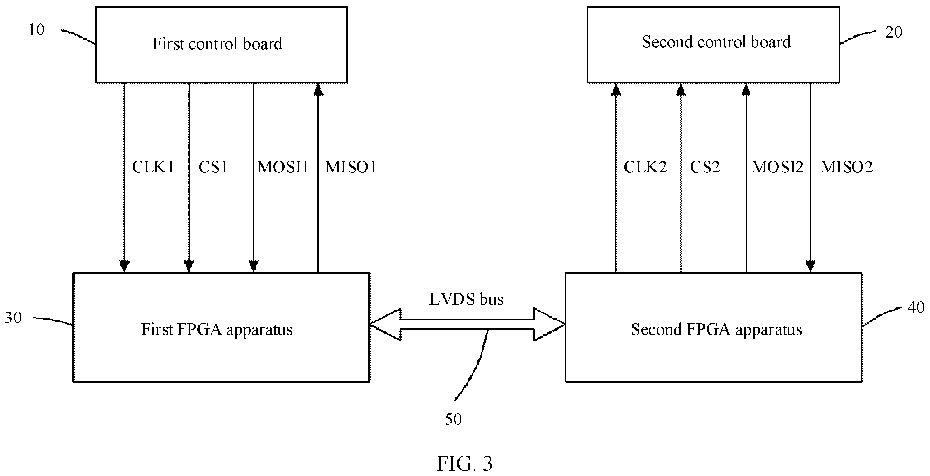

Refer to FIG. 3. The following uses an example to describe the signal transmission apparatus 100 provided in this embodiment of this application with reference to the accompanying drawings and an actual application scenario.

FIG. 3 uses as an example of an SPI signal transmitted between the first control board 10 and the second control board 20 for description. Specifically, the first control board 10 may include four SPI signal lines. The four SPI signal lines of the first control board 10 may be a CLK1 signal line, the CS1 signal line, the MOSI1 signal line, and the MISO1 signal line. The second control board 20 may include four SPI signal lines. The four SPI signal lines of the second control board 20 may be a CLK2 signal line, the CS2 signal line, the MOSI2 signal line, and the MISO2 signal line.

In a possible implementation, each of the CLK1 signal line, the CS1 signal line, the MOSI1 signal line, and the MISO1 signal line of the first control board 10 may be electrically connected to the first FPGA apparatus 30. Each of the CLK2 signal line, the CS2 signal line, the MOSI2 signal line, and the MISO2 signal line of the second control board 20 may be electrically connected to the second FPGA apparatus 40. In an embodiment, the first FPGA apparatus 30 is connected to the second FPGA apparatus 40 by using the LVDS bus.

Based on this design, signal transmission between the first control board 10 and the second control board 20 may be implemented by using signal processing of the first FPGA apparatus 30 and the second FPGA apparatus 40.

It can be understood that, a transmission process of an I2C signal, an I2S signal, a clock signal, and a GPIO signal that are transmitted between the first control board 10 and the second control board 20 may be the same as the transmission process of the SPI signal. Therefore, details are not described herein.

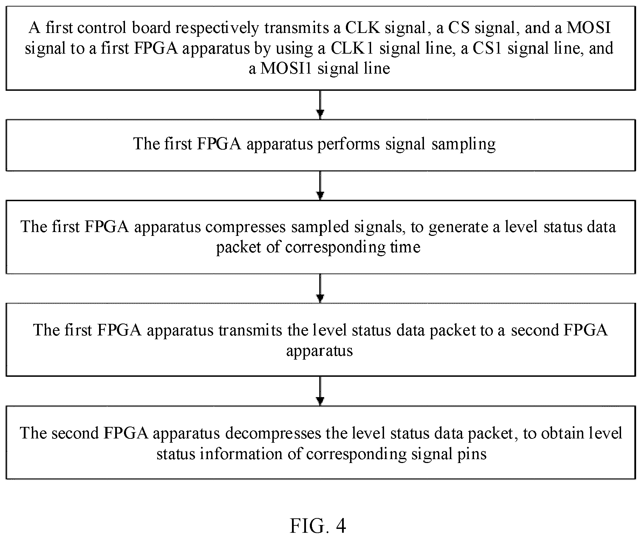

FIG. 4 uses an example in which the first control board 10 performs an SPI write operation on the second control board 20 for description.

If the first control board 10 performs the SPI write operation on the second control board 20, the central processing unit (Central Processing unit) of the first control board 10 may output the SPI signal to the first FPGA apparatus 30 according to the SPI protocol. For example, the first control board 10 may respectively transmit the CLK signal, the CS signal, and the MOSI signal to the first FPGA apparatus 30 by using the CLK1 signal line, the CS1 signal line, and the MOSI1 signal line. The first FPGA apparatus 30 may sample the SPI signal of the first control board 10 by using the CLK1 signal line, the CS1 signal line, and the MOSI1 signal line.

For example, the first FPGA apparatus 30 may perform analog-to-digital conversion on the CLK signal, the CS signal, and the MOSI signal of the SPI bus by using an analog-to-digital conversion module. To be specific, the first FPGA apparatus 30 may implement level sampling on the CLK signal, the CS signal, and the MOSI signal, and compress collected physical information such as a level value, a pin numbering, and sampling time, to generate a level status data packet of a corresponding moment.

The first FPGA apparatus 30 implements a communication connection with the second FPGA apparatus 40 by using the LVDS bus 50. Based on this design, the first FPGA apparatus 30 may transmit, by using the LVDS bus, the level status information data packet generated through compression to the second FPGA apparatus 40. Therefore, after the second FPGA apparatus 40 receives the level status information data packet transmitted by the first FPGA apparatus 30, the second FPGA apparatus 40 may decompress the level status information data packet to obtain decompressed digital signals.

Then, the second FPGA apparatus 40 may perform digital-to-analog conversion on the digital signals by using the digital-to-analog conversion module, to convert the digital signals into analog signals, that is, a CLK signal, a CS signal, and a MOSI signal. In this way, reconstruction of level signals are completed on the pins corresponding to the second FPGA apparatus 40. To be specific, the second FPGA apparatus 40 may transmit the CLK signal, the CS signal, and the MOSI signal to the second control board 20 by using the CLK2 signal line, the CS2 signal line, and the MOSI2 signal line respectively.

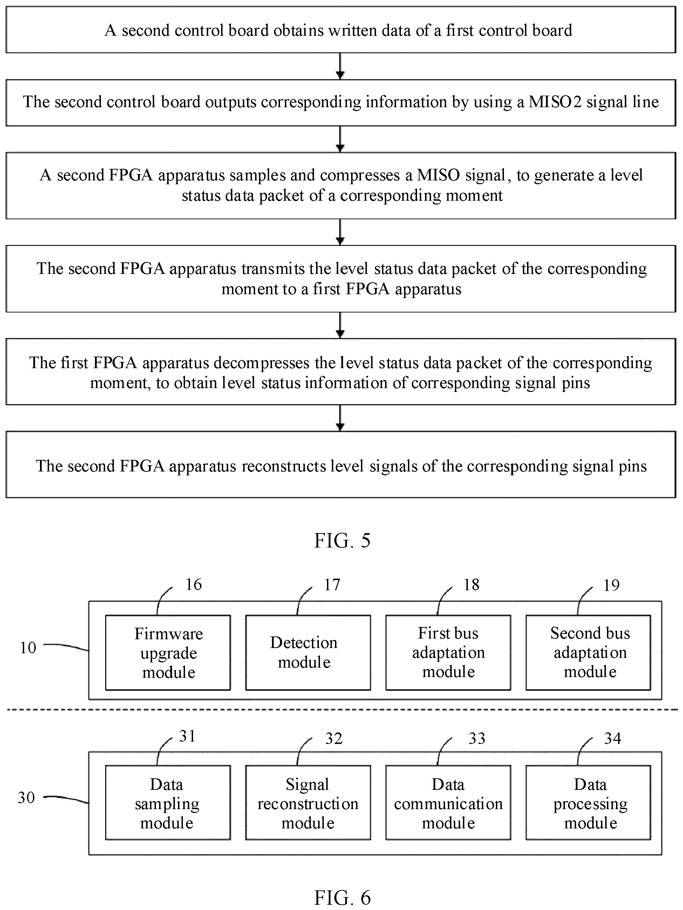

FIG. 5 uses an example in which the first control board 10 performs an SPI read operation on the second control board 20 for description.

After the second control board 20 receives written data of the first control board 10, the second control board 20 outputs information to the second FPGA apparatus 40 by using the MISO2 signal line. Then, the second FPGA apparatus 40 collects the CLK signal, the CS signal, and the MOSI signal of the second control board 20 by using the CLK2 signal line, the CS2 signal line, and the MOSI2 signal line. The second FPGA apparatus 40 further performs analog-to-digital conversion on a collected CLK signal, CS signal, and MOSI signal, to obtain corresponding digital signals.

Further, the second FPGA apparatus 40 further compresses the digital signals, and transmits the digital signals to the first FPGA apparatus 30 by using the LVDS bus. After receiving the compressed digital signals, the first FPGA apparatus 30 further decompresses the digital signals. Then, the first FPGA apparatus 30 may perform digital-to-analog conversion on the digital signals by using the digital-to-analog conversion module, to convert the digital signals into analog signals.

Based on this design, the first FPGA apparatus 30 may transmit the CLK signal, the CS signal, and the MOSI signal to the first control board 10 by using the CLK1 signal line, the CS1 signal line, and the MOSI1 signal line respectively.

Refer to FIG. 6. In a possible implementation, the first control board 10 may further include a firmware upgrade module 16, a detection module 17, a first bus adaptation module 18, and a second bus adaptation module 19.

It may be understood that, in this embodiment of this application, the firmware upgrade module 16 may be configured to upgrade firmware of the first FPGA apparatus 30. For example, the firmware upgrade module 16 may improve a function of the first FPGA apparatus 30, to enhance stability of the first FPGA apparatus 30, and may fix a vulnerability of the firmware in the first FPGA apparatus 30.

In a possible implementation, the detection module 17 may be configured to monitor a status of the first FPGA apparatus 30. For example, the detection module 17 may detect a normal state or an abnormal state of the first FPGA apparatus 30. If the detection module 17 detects that the first FPGA apparatus 30 is abnormal, the detection module 17 may send prompt information. The first bus adaptation module 18 may perform driver compatibility and adaptation on the first FPGA apparatus 30 by using the I2C bus. The second bus adaptation module 19 may perform driver compatibility and adaptation on the first FPGA apparatus 30 by using the SPI bus. Further, the second bus adaptation module 19 may further perform driver compatibility and adaptation on the first FPGA apparatus 30 by using the I2S bus.

As shown in FIG. 6, the first FPGA apparatus 30 may include a data sampling module 31, a signal reconstruction module 32, a data communication module 33, and a data processing module 34.

In an embodiment, the processing apparatus 11 of the first control board 10 may transmit a plurality of signals to the first FPGA apparatus 30 by using the SPI bus, the I2C bus, the I2S bus, the clock signal line CLK and the GPIO signal line. The data sampling module 31 may sample the plurality of signals that are transmitted by the processing apparatus 11 of the first control board 10. For example, the data collection module 31 may collect the SPI signal, the I2C signal, the I2S signal, the CLK signal, and the GPIO signal of the first control board 10. The signal reconstruction module 32 may be configured to implement a recovery function of the first control board 10.

In this embodiment, the data processing module 34 may implement a function like compression or decompression on data of the first FPGA apparatus 30. For example, the data processing module 34 may perform analog-to-digital conversion on the plurality of signals that are collected by the data collection module 31. For example, the data processing module 34 may perform analog-to-digital conversion on the sampled SPI signal, I2C signal, I2S signal, CLK signal, and GPIO signal. To be specific, the first FPGA apparatus 30 may implement level sampling on the plurality of signals of the first control board 10 by using the data processing module 34, and compress the collected physical information such as the level value, the pin numbering, and the sampling time, to generate the level status data packet of the corresponding moment.

In this embodiment, the data communication module 33 may implement data communication between the first FPGA apparatus 30 and the second FPGA apparatus 40, that is, the data communication module 33 may perform data transmission with the second FPGA apparatus 40. For example, the first FPGA apparatus 30 may transmit the data to the second FPGA apparatus 40 by using the data communication module 33. Specifically, the data communication module 33 may perform protocol conversion between the first FPGA apparatus 30 and the second FPGA apparatus 40. Then, the data communication module 33 may transmit the compressed level status information data packet to the second FPGA apparatus 40 by using the LVDS bus.

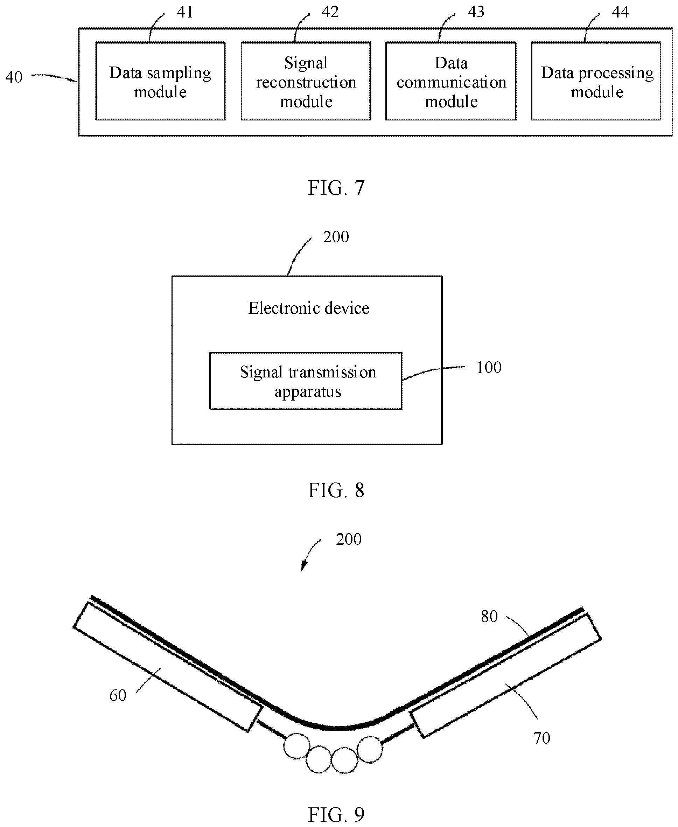

FIG. 7 is a schematic diagram of a structure of a second FPGA apparatus 40 according to an embodiment of this application. The second FPGA apparatus 40 in this embodiment may include a data sampling module 41, a signal reconstruction module 42, a data communication module 43, and a data processing module 44.

It may be understood that the data communication module 43 in this embodiment may receive the level status information data packet that is transmitted by the first FPGA apparatus 30, and transmit the level status information data packet to the data processing module 44. Therefore, the data processing module 44 may decompress the level status information data packet to obtain the decompressed digital signals. Then, the data processing module 44 may further perform digital-to-analog conversion on the decompressed digital signals, to obtain the corresponding analog signals. Therefore, the signal reconstruction module 42 may transmit the converted analog signals to the second control board 20.

In this embodiment of this application, the data sampling module 41 may be configured to: sample a plurality of signals of the second control board 20, and transmit the sampled signals to the data processing module 44. The data processing module 44 may perform analog-to-digital conversion and compression on the signals that are sampled by the data sampling module 41, and transmit a compressed data packet to the first FPGA apparatus 30 by using the data communication module 43. The data processing module 34 of the first FPGA apparatus 30 may decompress the data packet. Therefore, the signal reconstruction module 32 of the first FPGA apparatus 30 may reconstruct decompressed data.

It may be understood that, in this embodiment of this application, the plurality of modules of the first FPGA apparatus 30 may implement collection, conversion, and signal distribution for the plurality of signals of the first control board 10, and control data interaction with the second FPGA apparatus 40.

In this embodiment, the firmware upgrade module 16 in the first control board 10 may upgrade firmware of the second FPGA apparatus 40.

It may be understood that, in this embodiment of this application, the plurality of modules of the second FPGA apparatus 40 may implement collection, conversion, and signal distribution for the plurality of signals of the second control board 20, and control data interaction with the first FPGA apparatus 30.

The first FPGA apparatus 30 may be connected to the second FPGA apparatus 40 by using the LVDS bus, to perform bidirectional data exchange and further implement signal transmission.

Refer to FIG. 8. An embodiment of this application further provides an electronic device 200. The electronic device 200 may be a foldable electronic device or the like. This is not limited in this application. As shown in FIG. 8, the electronic device 200 may include the signal transmission apparatus 100 described in the foregoing embodiment.

In a possible scenario, as shown in FIG. 9, the electronic device 200 may be the foldable electronic device. In a possible implementation, the electronic device 200 may be at least one of a foldable mobile phone, a foldable tablet, a foldable computer, a foldable notebook computer, a vehicle-mounted mobile apparatus, an electronic device with a foldable flexible display, or the like.

The electronic device 200 may include a first housing 60, a second housing 70, and a flexible display 80. Two sides that face each other of the electronic device 200 are respectively connected to the first housing 60 and the second housing 70. In this case, the first housing 60 and the second housing 70 may rotate toward or away from each other by using a foldable rotating shaft structure. The flexible display 80 is disposed on both the first housing 60 and the second housing 70. It may be understood that, in some implementations, the flexible display 80 may be configured to: display information and provide an interaction interface for a user. The flexible display 80 may be fastened to the first housing 60 and the second housing 70 in a manner such as adhesive dispensing. Each of the first housing 60 and the second housing 70 may form mounting space. The first control board 10 and the first FPGA apparatus 30 may be disposed in the first housing 60. The second control board 20 and the second FPGA apparatus 40 may be mounted in the second housing 70.

The signal transmission apparatus and the electronic device in embodiments of this application are used, so that the quantity of signal lines between the first control board 10 and the second control board 20 can be effectively reduced by adding one FPGA apparatus to each of the first control board 10 and the second control board 20. This can reduce signal interference, improve signal transmission quality of the electronic device, and reduce costs. A person of ordinary skill in the art shall be aware that, the foregoing implementations are only used to describe this application, but are not intended to limit this application. Appropriate modifications and variations made to the foregoing embodiments shall fall within the protection scope of this application provided that the modifications and variations fall within the substantive scope of this application.

## Claims

1. A signal transmission apparatus, wherein the signal transmission apparatus comprises a first control board, a second control board, a first FPGA apparatus disposed on a side of the first control board, and a second FPGA apparatus disposed on a side of the second control board, wherein
the first control board is connected to the first FPGA apparatus by using a first signal line group, to establish a communication connection with the first FPGA apparatus, wherein the first signal line group comprises at least one signal line;
the second control board is connected to the second FPGA apparatus by using a second signal line group, to establish a communication connection with the second FPGA apparatus, wherein the second signal line group comprises at least one signal line; and
the first FPGA apparatus establishes a communication connection with the second FPGA apparatus by using a first bus, wherein a quantity of signal lines of the first bus is less than a quantity of signal lines of the first signal line group or a quantity of signal lines of the second signal line group.

2. The signal transmission apparatus according to claim 1, wherein
the first control board comprises a processing apparatus, and the first FPGA apparatus is configured to sample a plurality of signals that are output by the processing apparatus.

3. The signal transmission apparatus according to claim 1 or 2, wherein
the first FPGA apparatus is further configured to: convert the plurality of signals of the first control board, and compress converted signals to generate a data packet.

4. The signal transmission apparatus according to claim 3, wherein
the first FPGA apparatus is further configured to transmit the data packet to the second FPGA apparatus by using the first bus, and the second FPGA apparatus is configured to: receive the data packet, and decompress the data packet.

5. The signal transmission apparatus according to claim 4, wherein
the second FPGA apparatus is further configured to: convert decompressed signals, and transmit converted signals to the second control board.

6. The signal transmission apparatus according to any one of claims 1 to 5, wherein
the first bus is a low-voltage differential signaling bus.

7. The signal transmission apparatus according to any one of claims 1 to 6, wherein
the first signal line group comprises an SPI signal line, an I2C signal line, an I2S signal line, and a GPIO signal line.

8. The signal transmission apparatus according to any one of claims 1 to 7, wherein
the second signal line group comprises an SPI signal line, an I2C signal line, an I2S signal line, and a GPIO signal line.

9. A signal transmission method, applied to a signal transmission apparatus, wherein the signal transmission apparatus comprises a first control board, a second control board, a first FPGA apparatus, and a second FPGA apparatus; and the method comprises:
receiving, by the first FPGA apparatus, a plurality of signals sent by the first control board, and compressing the plurality of signals to generate a data packet, wherein the first control board is connected to the first FPGA apparatus by using a first signal line group, and the first signal line group comprises a plurality of signal lines;
receiving, by the second FPGA apparatus, the data packet of the first FPGA apparatus, wherein the first FPGA apparatus establishes a communication connection with the second FPGA apparatus by using a first bus; and
decompressing, by the second FPGA apparatus, the data packet, and transmitting decompressed data to the second control board, wherein the second control board is connected to the second FPGA apparatus by using a second signal line group, and the second signal line group comprises a plurality of signal lines.

10. The signal transmission method according to claim 9, wherein
a quantity of signal lines of the first bus is less than a quantity of signal lines of the first signal line group or a quantity of signal lines of the second signal line group.

11. The signal transmission method according to claim 9 or 10, wherein the method further comprises:
transmitting, by the first FPGA apparatus, the data packet to the second FPGA apparatus by using the first bus, and converting, by the second FPGA apparatus, signals obtained by decompressing the data packet, and transmitting converted signals to the second control board.

12. The signal transmission method according to any one of claims 9 to 11, wherein
the first bus is a low-voltage differential signaling bus.

13. The signal transmission method according to any one of claims 9 to 12, wherein
the first signal line group comprises an SPI signal line, an I2C signal line, an I2S signal line, and a GPIO signal line.

14. The signal transmission method according to any one of claims 9 to 13, wherein
the second signal line group comprises an SPI signal line, an I2C signal line, an I2S signal line, and a GPIO signal line.

15. An electronic device, wherein the electronic device comprises the signal transmission apparatus according to any one of claims 1 to 8.

16. The electronic device according to claim 15, wherein
the electronic device is a foldable electronic device.
